# FASCICULE DE BREVET EUROPEEN

(11) **EP 2 208 849 B1**
(45) Date de publication et mention de la délivrance du brevet: **15.01.2014**
(21) Numéro de dépôt: 10370001.9
(22) Date de dépôt: 08.01.2010
(51) Int. Cl.: E06B 9/171, E06B 9/44, E06B 9/72, H02K 5/08

(54) **Arbre d'enroulement motorisé, notamment pour un dispositif de fermeture ou d'occultation**
Motorisierte Wickelwelle, insbesondere für eine Fensterabdeckung
Motorised roller, in particular for a window cover

(30) Priorité: 15.01.2009 FR 0900169
(43) Date de publication de la demande: 21.07.2010
(73) Titulaire: Deprat Jean SA, 59115 Leers (FR)
(72) Inventeur: Doyennette, Ludovic, 59115 Leers (FR); Kimpe, Florent, 59115 Leers (FR)
(74) Mandataire: Boubal, Denis Henri Jacques

(56) Documents cités:
- EP-A- 0 974 727
- EP-A2- 1 918 506
- WO-A-02/48497
- FR-A- 2 745 126
- FR-A- 2 872 196
- US-A- 5 887 637

## Description

L'invention concerne un arbre d'enroulement motorisé, notamment pour un dispositif de fermeture ou d'occultation, tel qu'un volet roulant, ou encore pour un dispositif d'occultation, tel qu'un store.

Dans ce domaine, il est connu d'utiliser des arbres d'enroulement autour desquels peuvent, par exemple, s'enrouler les toiles des stores ou encore les tabliers de volets roulants.

De manière connue, par exemple dans le domaine des volets roulants, ce type d'arbre motorisé est constitué par un tube d'enroulement, assujetti en rotation à ses extrémités à des consoles ou aux joues d'un coffre. L'une des extrémités du tube d'enroulement coopère notamment avec un moteur électrique, intérieur au tube, introduit à l'une de ses extrémités. Ce moteur se présente sous la forme d'un motoréducteur qui entraîne en rotation ledit tube par l'intermédiaire d'une roue de l'arbre du moteur.

Eventuellement, une bague palier est montée tournante par rapport au carter du moteur tubulaire permettant de guider en rotation le tube d'enroulement à l'une de ses extrémités. A l'autre extrémité du tube, une interface est emmanchée dans le tube et pivote autour d'un axe pour supporter le tube d'enroulement à cette extrémité.

Afin d'obtenir une résistance à la torsion et/ou à la flexion acceptable, les tubes d'enroulement sont, jusqu'à aujourd'hui, constitués en métal, notamment à partir d'une feuille métallique, conformée en tube par des opérations de profilage.

Par ailleurs, d'une manière générale, les normes de sécurité électriques en vigueur imposent de raccorder au moteur tubulaire, outre les fils d'alimentation que sont la phase et le neutre, le fil de terre afin de protéger les utilisateurs. Cet impératif complique toutefois la pose, notamment dans le cas de rénovation, car elle implique l'intervention d'un électricien pour tirer un fil de terre jusqu'au tableau électrique.

On connaît toutefois des moteurs tubulaires pour lesquels le raccordement à la terre n'est pas imposé. Il s'agit de motoréducteurs dont le carter constitue une enveloppe électriquement isolante pour le moteur. Le document FR-2.745.126 et encore le document FR-2.872.196 enseignent de tels types de moteurs tubulaires dont le carter du moteur est isolé électriquement grâce à une enveloppe de matière non conductrice.

L'isolation de ce type de moteur tubulaire n'est toutefois pas sans poser de problèmes, notamment ceux exposés dans les documents précités. Par ailleurs, les solutions apportées par ces deux documents sont relativement complexes et ont un coût non négligeable sur la fabrication de ces moteurs.

Le but de la présente invention a pour but de pallier les inconvénients précités en proposant un arbre d'enroulement motorisé qui ne nécessite pas de raccordement à la terre.

Un autre but de l'invention est de proposer un arbre d'enroulement motorisé dont le moteur tubulaire en tant que tel ne nécessite pas de caractéristique spécifique d'isolation électrique.

D'autres buts et avantages de la présente invention apparaîtront au cours de la description qui va suivre qui n'est donnée qu'à titre vindicatif et qui n'a pas pour but de la limiter.

L'invention concerne tout d'abord un arbre d'enroulement tel que défini à la revendication 1.

Selon des caractéristiques optionnelles :
- un obturateur peut être rapporté à l'extrémité du tube d'enroulement opposé au moteur électrique tubulaire, fermant ledit tube d'enroulement, ledit obturateur présentant un alésage destiné pour le passage d'un axe de liaison.
- le tube d'enroulement se présente sous la forme d'un tube extrudé dans une matière électriquement isolante, en une seule ou plusieurs parties,
- le tube d'enroulement comprend au moins deux parois coaxiales, espacées l'une de l'autre par l'intermédiaire de nervures de rigidification, radiales, l'une des parois du tube d'enroulement étant constituée par une âme intérieure de section fermée à l'intérieur de laquelle peut être introduit ledit moteur tubulaire, l'autre des parois étant constituée par une âme extérieure de section fermée constituant la surface d'enroulement dudit tube d'enroulement,
- ladite âme intérieure peut présenter des rainures longitudinales permettant notamment d'assujettir en rotation la roue d'entraînement du moteur tubulaire qui présente des reliefs complémentaires engageant avec les rainures,
- dans le cas d'un tube constitué de deux parties extrudées, l'un des éléments, extérieur, définit la surface d'enroulement du tube ainsi qu'un logement pour le moteur tubulaire, tandis que l'autre élément, intérieur, est encastré dans l'élément extérieur et s'étend sur la quasi-totalité de l'espace libre laissé par ledit moteur tubulaire afin d'améliorer la rigidité de l'ensemble,
- le tube d'enroulement peut comprendre des baguettes de rigidification, telles que par exemple métalliques, introduites dans des canaux longitudinaux audit tube,
- la surface d'enroulement du tube d'enroulement peut présenter des moyens pour la fixation d'un tablier de volet roulant, directement sur la paroi extérieure du tube, ou encore indirectement par l'intermédiaire d'un verrou anti-intrusion ou de liaisons souples, lesdits moyens prenant la forme de zones de réception telles que des ouvertures sur ladite âme extérieure du tube d'enroulement,
- le profil du tube d'enroulement intègre une zone de fixation dans laquelle peut être glissée la première lame d'un tablier de volet roulant,
- la surface d'enroulement dudit tube d'enroulement peut présenter un profil en spirale, afin d'obtenir un enroulement continu du tablier,
- une interface de fixation peut être encastrée à l'extrémité dudit tube d'enroulement opposée audit moteur tubulaire, un axe de liaison étant prévu dans un alésage de ladite interface de fixation, selon une tolérance autorisant le coulissement dudit axe de liaison dans ledit alésage, ledit axe de liaison et l'interface de fixation constituant un ensemble télescopique permettant d'ajuster la longueur dudit arbre d'enroulement,
- le moteur électrique tubulaire est un moteur à courant alternatif.

L'invention concerne également un agencement de dispositif de fermeture, tel qu'un volet roulant, ou dispositif d'occultation, tel que store, comprenant un arbre d'enroulement motorisé, selon l'invention, dont le moteur tubulaire est alimenté par une source électrique, notamment via un fil de phase et un fil de neutre, mais dans lequel ledit moteur tubulaire n'étant pas raccordé à la terre.

L'invention sera mieux comprise à la lecture de la description suivante accompagnée des dessins en annexe parmi lesquels :
- la figure 1 est une vue de coupe, selon l'axe longitudinal, d'un arbre d'enroulement, conforme à l'invention, selon un mode de réalisation,
- la figure 1a est une vue de détail du cadre Ia tel qu'illustré à la figure 1, illustrant plus particulièrement le vissage et l'étanchéité entre le moteur et le tube d'enroulement,
- la figure 1b est une vue de détail du cadre Ib tel qu'illustré à la figure 1, illustrant l'étanchéité à l'extrémité du tube opposé à celle du moteur,
- la figure 2 est une vue du moteur tubulaire et du tube d'enroulement, (seule une section de longueur du tube d'enroulement extérieur est représentée), conforme à l'invention selon l'exemple de la figure 1,
- la figure 3 est une vue éclatée illustrant le tube d'enroulement constitué de deux éléments encastrés avec l'élément extérieur tel qu'illustré à la figure 2, et un élément intérieur constituant également une interface de fixation encastrée à l'opposé du moteur tubulaire, telle qu'illustrée à la figure 1,
- la figure 4 est une vue de profil d'un tube d'enroulement selon un second mode de réalisation, présentant une zone de fixation dans laquelle peut être glissée la première lame d'un tablier de volet roulant,
- la figure 5 est une vue de profil d'une lame de volet roulant.

L'invention concerne un arbre d'enroulement 1 motorisé notamment pour volet roulant, store ou autres dispositifs de fermeture ou d'occultation.

L'arbre d'enroulement motorisé 1 comprend un tube d'enroulement 2, un moteur électrique tubulaire 3, introduit à l'une des extrémités du tube d'enroulement 2 pour son actionnement en rotation dans un sens ou dans l'autre.

Le moteur électrique tubulaire 3 constitue un support d'enroulement pour le tube d'enroulement 2 à cette extrémité.

Selon l'invention, l'arbre d'enroulement 1 motorisé, avec ledit tube d'enroulement 2 et ledit moteur électrique tubulaire 3, forme un ensemble indissociable, le tube d'enroulement 2 étant dans une matière électriquement isolante, telle que le plastique, et recouvrant ledit moteur électrique tubulaire de telle façon à constituer une enveloppe électriquement isolante pour ledit moteur électrique tubulaire.

Avantageusement, le tube d'enroulement 2 peut ainsi constituer une enveloppe isolante pour le moteur tubulaire, notamment conforme à la norme européenne EN 60 335-1, de telle façon que l'arbre d'enroulement motorisé puisse être considéré comme un appareil électrique de type classe II selon ladite norme.

Le moteur tubulaire 3 peut être un appareil de type classe 1 selon la norme européenne, son association dans le tube 2 rendant l'ensemble de l'arbre d'enroulement motorisé de type classe II. Il peut s'agir d'un moteur à courant alternatif alimenté en tension par une tension comprise entre 100 V à 360 V, tel que par exemple 120 V, 230 ou 240 V.

Avantageusement, afin d'éviter tout risque de sécurité électrique, l'arbre d'enroulement 1 motorisé forme un ensemble indissociable.

On entend par indissociable le fait que les éléments constitutifs de l'arbre d'enroulement 1 (tube 2 et moteur 3 plus particulièrement), sont solidaires et ne peuvent pas être désassemblés aisément manuellement, interdisant ainsi à l'utilisateur de toucher à l'intégrité de l'enveloppe électrique isolante par le démontage de l'arbre d'enroulement motorisé.

A cet effet, selon un exemple, le tube 2 et le moteur 3 peuvent être solidarisés par vissage, notamment au moyen de vis entre la bague palier 31 du moteur et le tube d'enroulement 2.

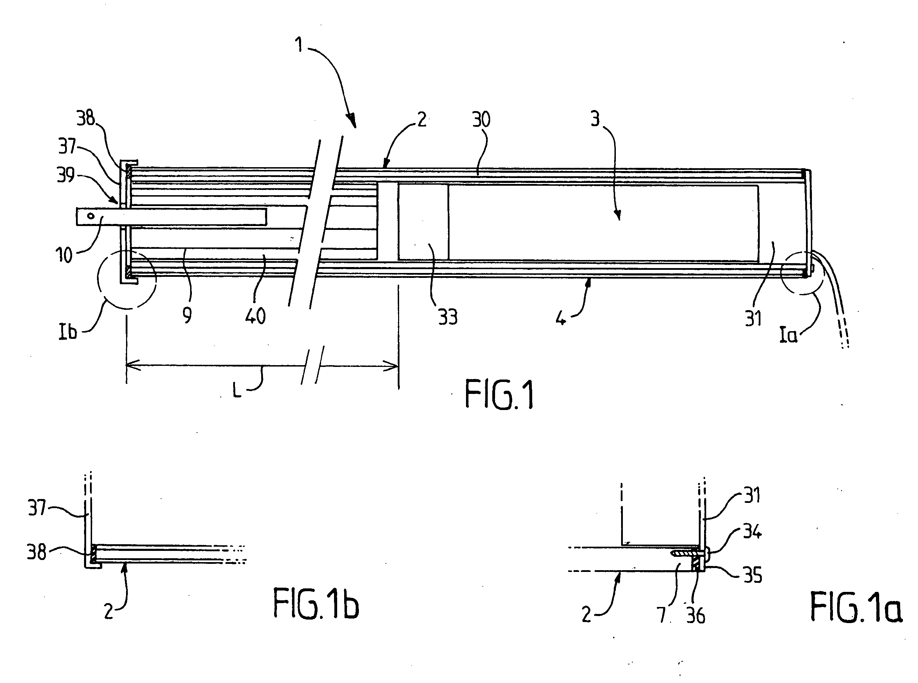

Plus précisément, tel qu'illustré à la figure 1a, ces vis 34 sont parallèles au tube 2 et traversent une collerette 35 de la bague palier 31 venant recouvrir l'extrémité du tube 31 pour s'engager au niveau d'alésages de vissage longitudinaux au tube 2.

Ce vissage peut permettre, en outre, de comprimer un joint 36 prévu entre la bague palier 31 et le tube 2 afin de réaliser une étanchéité à cette extrémité.

Il est à noter que d'autres moyens peuvent être prévus pour solidariser la bague palier 31 et le tube 2, tels que notamment des moyens de clipsage, des rivets, des agrafes ou autres.

Tel qu'illustré à la figure 1, le moteur tubulaire 3 présente un carter, notamment métallique, globalement cylindrique, dont le diamètre est légèrement inférieur au diamètre d'un élément extérieur 30 du tube d'enroulement.

Le moteur tubulaire 3 présente notamment à l'une de ses extrémités ladite bague palier 31 tournante par rapport au carter cylindrique et assujetti en rotation audit tube grâce à une clavette 32.

A l'autre extrémité du moteur 3, une roue d'entraînement 33 de l'arbre du moteur 3 est assujettie en rotation au tube 2 notamment par l'intermédiaire de reliefs. Ces reliefs, tels que des nervures 34 de la roue, engagent avec des rainures longitudinales 8 sur la surface intérieure de l'élément 30 du tube 2.

Eventuellement, comme déjà mentionné, un joint d'étanchéité 36 peut être prévu à l'extrémité du tube entre le tube 2 et le moteur tubulaire 3, plus précisément entre l'élément 30 du tube 2 et la bague palier 31, afin d'améliorer l'isolation électrique.

A l'extrémité du tube 2 opposé au moteur tubulaire 3, l'étanchéité peut être réalisée grâce à un obturateur 37, rapporté au tube, venant fermer ledit tube à cette extrémité. Eventuellement un joint 38 peut être prévu entre l'obturateur 37 et le tube 2. Cet obturateur 37 peut s'emboîter sur l'extrémité du tube 2 et peut présenter notamment un alésage 39 pour le passage d'un axe de liaison 10 qui sera développé par la suite.

D'une manière générale, ces étanchéités peuvent permettre à l'arbre d'enroulement 1 d'être un appareil de type classe II avec un degré IP tel que IPX4. Pour certaines applications, il peut s'agir d'un arbre d'enroulement submersible.

Avantageusement, le tube d'enroulement peut être réalisé par extrusion dans une matière isolante telle que le plastique. Il s'agit ainsi d'un tube extrudé en une seule ou plusieurs parties.

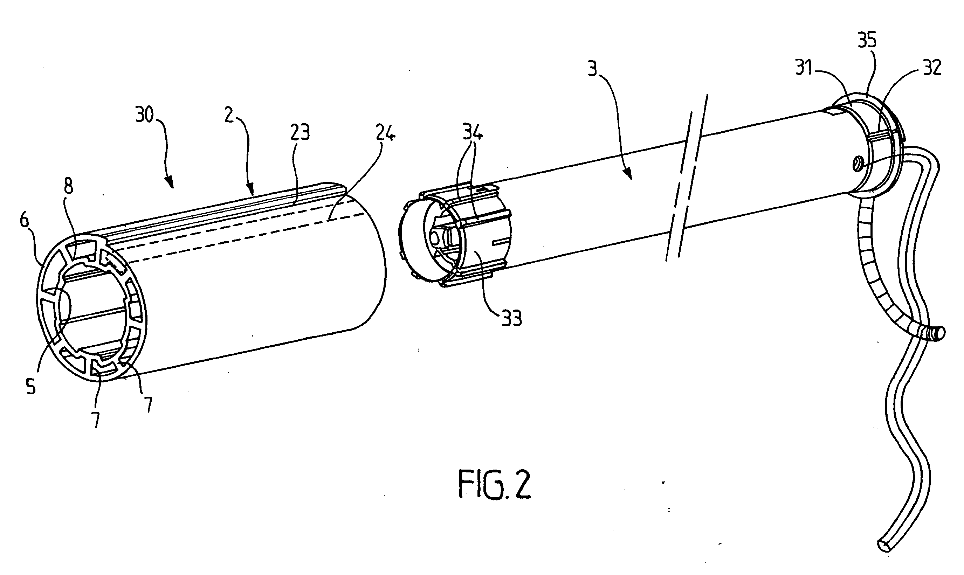

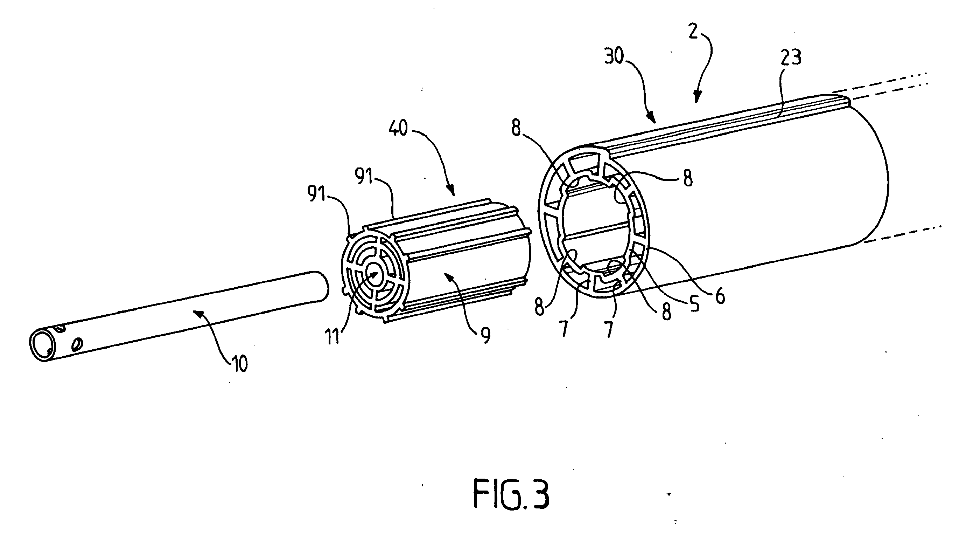

L'exemple des figures 2 et 3 illustre notamment un tube d'enroulement 2 notamment synthétique réalisé par deux éléments extrudés 30,40.

Afin de présenter des performances de résistance améliorées à la flexion et/ou à la torsion, le tube d'enroulement peut comprendre un élément 30 avec au moins deux parois 5, 6 coaxiales, espacées l'une de l'autre par l'intermédiaire de nervures de rigidification 7. Cette structure de tube permet d'augmenter la rigidité du tube afin de limiter la flèche provoquée par le poids des organes que supporte le tube.

Tel qu'illustré notamment selon l'exemple de la figure 3, ces nervures de rigidification 7 sont radiales. L'une des parois du tube d'enroulement est constituée par une âme intérieure 5 de section fermée à l'intérieur de laquelle peut être introduit ledit moteur tubulaire 3. L'autre paroi est constituée par une âme extérieure 6 de section fermée et constitue la surface d'enroulement du tube 2.

Tel qu'illustré notamment selon l'exemple de la figure 2, l'élément 30 du tube d'enroulement est à deux parois 5, 6, les nervures de rigidification 7, angulairement réparties autour de l'axe longitudinal du tube 2 reliant ladite âme intérieure 5 à ladite âme extérieure 6.

Eventuellement, le tube d'enroulement 2 peut comprendre des baguettes de rigidification, telles que par exemple métalliques, introduites dans des canaux longitudinaux audit tube 2. Notamment, ces baguettes (non illustrées) peuvent être introduites dans les canaux formés entre les nervures de rigidification 7 et sont donc enfermées par l'enveloppe isolante du tube 2.

Avantageusement, la surface d'enroulement du tube d'enroulement 2, notamment ladite âme extérieure 6 peut présenter des moyens pour la fixation d'un tablier de volet roulant, directement sur la paroi extérieure du tube, ou encore indirectement par l'intermédiaire d'un verrou anti-intrusion ou de liaisons souples. Dans le cas d'un tube à double paroi, ces moyens peuvent prendre la forme de zones de réception telle que des ouvertures sur ladite âme extérieure 6 du tube d'enroulement 2.

L'intégrité de l'enveloppe électrique n'est toutefois pas affectée par ces ouvertures, sur la paroi extérieure du tube, grâce à la paroi intérieure, à savoir ladite âme intérieure 6, fermée qui constitue elle-même une enveloppe pour le moteur tubulaire 3.

Selon un exemple, les moyens de fixation sont constitués d'une rainure de section en queue d'aronde (non illustrée), longitudinale au tube, permet la fixation d'un tablier de volet roulant.

Cette rainure, de section en queue d'aronde, permet notamment la fixation du tablier de volet roulant grâce à des organes de fixation qui présentent une section complémentaire à la section en queue d'aronde et qui sont glissés aux extrémités du tube dans la rainure. Chaque organe de fixation est déplacé jusqu'à la position la plus adaptée pour la fixation du tablier roulant.

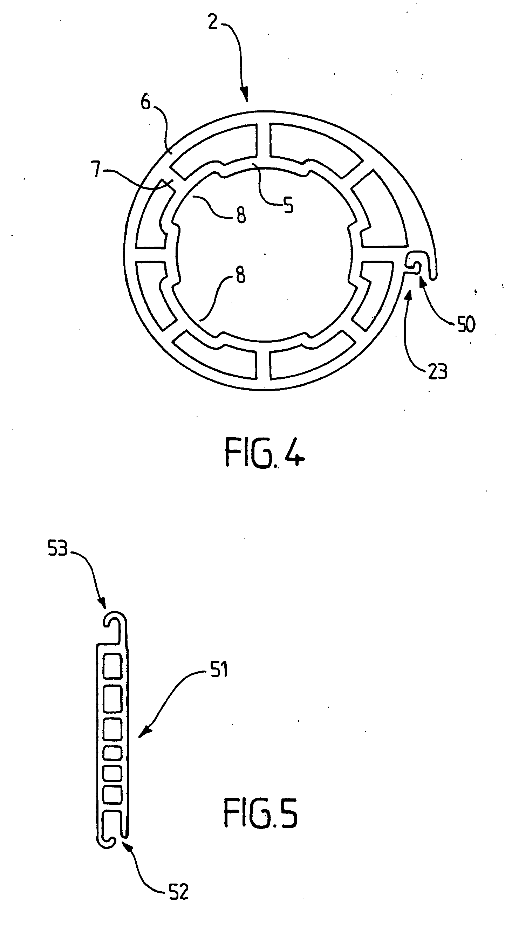

Selon un exemple illustré à la figure 4, le tube d'enroulement 2 peut permettre la fixation directe d'un tablier de volet roulant. A cet effet, le profil du tube peut présenter une zone de fixation 50 dans laquelle peut être glissée la première lame du tablier de volet roulant.

Bien souvent, telles qu'illustrées à la figure 5, les lames, extrudées en plastique ou en aluminium, présentent sur leur chant supérieur et leur chant inférieur, des parties de fixation mutuellement engageantes.

Généralement, il s'agit d'un profil en crochet 50 sur le chant supérieur de la lame 51 et d'une gorge de section complémentaire 52 sur le chant inférieur de ladite lame 51.

Selon l'exemple de la figure 5, la zone de fixation 50 peut être réalisée lors de l'extrusion du tube, constitué par une gorge de section complémentaire à la partie d'accroche supérieure en crochet des lames. Selon l'exemple de la figure 5, cette zone 50 est réalisée au niveau d'un décroché 23 d'une spirale dont la fonction est développée par la suite.

Dans le cas d'un tube d'enroulement pour volet roulant, la surface d'enroulement peut présenter un profil en spirale. Ce profil en spirale permet ainsi d'obtenir un meilleur enroulement du tablier de volet roulant par rapport à un profil circulaire.

Plus précisément, la fixation du tablier ou de la liaison entre l'extrémité supérieure du tablier avec le tube peut être avantageusement réalisée et située au début de la spirale, sur la zone de plus petit rayon de la surface d'enroulement, à l'arrière d'un décroché 23. C'est notamment sur cette zone, repérée par deux lignes pointillées 24 que peut être réalisée ladite rainure longitudinale de section en queue d'aronde, et plus généralement les moyens pour la fixation du tablier.

Avec cette spirale, lorsque l'enroulement de l'ensemble tablier liaison tube/tablier fait un tour, le décroché 23 masque la différence de niveau du début d'enroulement de telle façon à permettre un enroulement régulier et continu de l'ensemble. Tel qu'illustré, ce profil en spirale peut être défini par ladite âme extérieure 6 du tube 2.

Selon les exemples des figures, le tube d'enroulement 2 est constitué de deux éléments 30, 40, tubulaires extrudés et encastrés l'un dans l'autre.

L'un des éléments 30, extérieur, définit la surface d'enroulement du tube, ainsi qu'un logement longitudinal pour le moteur tubulaire et peut présenter la structure telle que précédemment décrite.

L'élément intérieur 40 est encastré dans l'élément extérieur 30 et peut s'étendre sur la quasi-totalité de l'espace libre laissé par ledit moteur tubulaire 3, afin d'augmenter la rigidité de l'ensemble. Par exemple, l'élément intérieur 40 peut s'étendre au moins sur les 3/4 de la longueur L de l'élément extérieur 30 non occupé par le moteur tubulaire, telle que représentée à la figure 1.

Par ailleurs, telle qu'illustrée à la figure 1 ou 3, le tube comprend une interface de fixation 9, notamment en matière plastique, est encastrée à l'extrémité du tube d'enroulement 2 opposée audit moteur tubulaire 3. Cette interface est notamment constituée par un élément extrudé dont la section extérieure est dimensionnée par rapport au profil intérieur du tube, et selon une tolérance autorisant un encastrement.

Selon l'exemple des figures, l'interface 9 et ledit élément intérieur 40 du tube d'enroulement 2 sont constitués par une seule et même pièce.

Elle présente notamment des nervures longitudinales 91, qui viennent coopérer avec les rainures 8 longitudinales de l'élément extérieur du tube d'enroulement, ainsi qu'un alésage 11, à l'intérieur duquel un axe de liaison 10, notamment métallique, peut coulisser. Ainsi, ledit axe de liaison 10 et l'interface 9 constituent un ensemble télescopique permettant d'ajuster la longueur dudit tube d'enroulement 1.

L'invention concerne également un agencement de dispositif de fermeture, tel qu'un volet roulant, ou de dispositifs d'occultation, tel qu'un store, comprenant un arbre d'enroulement motorisé 1 selon l'invention dont le moteur tubulaire 3 est alimenté par une source électrique, telle que le réseau notamment via un fil de phase et un fil de neutre, mais dans lequel ledit moteur tubulaire n'étant pas raccordé à la terre.

Ceci est notamment permis grâce au tube d'enroulement 2 qui coopère avec le moteur tubulaire électrique 3 pour constituer une enveloppe électriquement isolante qui, peut être selon un exemple de réalisation, une enveloppe isolante d'un appareil de type classe II notamment selon la norme européenne EN 60 335-1. Le moteur peut être un moteur à courant alternatif.

Naturellement, d'autres modes de réalisation auraient pu être envisagés par l'homme du métier sans pour autant sortir du cadre de l'invention défini par les revendications ci-après.

## Revendications

1. Arbre d'enroulement (1) motorisé, notamment pour volet roulant, store ou autres dispositifs de fermeture ou d'occultation, comprenant un tube d'enroulement (2), un moteur électrique tubulaire pourvu d'un carter, notamment métallique (3), ledit moteur électrique tubulaire (3) étant introduit et assujetti à l'une (4) des extrémités dudit tube d'enroulement (2), pour son actionnement en rotation dans un sens ou dans l'autre par l'intermédiaire d'une roue d'entraînement (33) de l'arbre dudit moteur électrique, ledit moteur tubulaire constituant un support de rotation pour le tube d'enroulement à cette extrémité, le moteur électrique tubulaire (3) présentant une bague palier (31) tournante par rapport au carter cylindrique et assujetti en rotation audit tube d'enroulement, **caractérisé en ce que** :
- ledit tube d'enroulement (2) est dans une matière électriquement isolante, telle que le plastique, et recouvre ledit moteur électrique tubulaire (3) de telle façon à constituer une enveloppe électriquement isolante pour ledit moteur électrique tubulaire (3),
- ledit tube d'enroulement (2) et ledit moteur électrique tubulaire (3) constituent un ensemble indissociable, la bague palier (31) présentant une collerette (35) apte à recouvrir l'extrémité dudit tube d'enroulement (2), ledit moteur (3) et le tube (2) étant solidarisés au moyen de vis (34) ou tout autre moyen entre ladite bague palier (31) et le tube d'enroulement (2), aptes à comprimer un joint (36) prévu entre ladite bague palier (31) et ledit tube d'enroulement (2).

2. Arbre d'enroulement selon la revendication 1, dans lequel un obturateur (37) est rapporté à l'extrémité du tube d'enroulement (2) opposée au moteur électrique tubulaire (3), fermant ledit tube d'enroulement (2), ledit obturateur (37) présentant un alésage (38) destiné pour le passage d'un axe de liaison (10).

3. Arbre d'enroulement selon l'une des revendications 1 ou 2, dans lequel ledit tube d'enroulement (2) se présente sous la forme d'un tube dans une matière électriquement isolante, extrudé en une seule ou plusieurs parties.

4. Arbre d'enroulement selon la revendication 3, dans lequel le tube d'enroulement (2) comprend au moins deux parois (5, 6) coaxiales, espacées l'une de l'autre par l'intermédiaire de nervures de rigidification (7), notamment radiales, l'une des parois du tube d'enroulement étant constituée par une âme intérieure (5), de section fermée à l'intérieur de laquelle peut être introduit ledit moteur tubulaire (3), une autre des parois étant constituée par une âme extérieure (6) de section fermée, constituant la surface d'enroulement dudit tube d'enroulement (2).

5. Arbre d'enroulement selon la revendication 4, dans lequel ladite âme intérieure (5) présente des rainures longitudinales (8).

6. Arbre d'enroulement selon l'une des revendications 3 à 5, dans lequel le tube d'enroulement (2) est constitué de deux éléments (30, 40) tubulaires extrudés et encastrés l'un dans l'autre, l'un des éléments (30), extérieur définissant la surface d'enroulement du tube (2), ainsi qu'un logement longitudinal pour le moteur tubulaire (3), l'autre élément (40) s'étendant dans l'élément extérieur (30) sur la quasi-totalité de l'espace libre laissé par ledit moteur tubulaire (3).

7. Arbre d'enroulement selon la revendication 4 ou 5, dans lequel la surface d'enroulement dudit tube d'enroulement (2) présente des moyens pour la fixation d'un tablier de volet roulant, directement sur la paroi extérieure du tube (2), ou encore indirectement par l'intermédiaire d'un verrou anti-intrusion ou de liaisons souples, lesdits moyens prenant la forme de zones de réception telles que des ouvertures sur ladite âme extérieure (6) du tube d'enroulement (2).

8. Arbre d'enroulement selon l'une des revendications 1 à 7 dans lequel le profil du tube d'enroulement (2) intègre une zone de fixation (50) dans laquelle peut être glissée la première lame du tablier de volet roulant.

9. Arbre d'enroulement selon l'une des revendications 1 à 8, pour volet roulant, dans lequel la surface d'enroulement dudit tube d'enroulement présente un profil en spirale.

10. Arbre d'enroulement selon l'une des revendications 1 à 9, dans lequel une interface de fixation (9) est encastrée à l'extrémité dudit tube d'enroulement (2) opposée audit moteur tubulaire (3), un axe de liaison (10) étant prévu dans un alésage (11) de ladite interface de fixation (9), selon une tolérance autorisant le coulissement dudit axe de liaison (10) dans ledit alésage (11), ledit axe de liaison (10) et l'interface de fixation (9) constituant un ensemble télescopique permettant d'ajuster la longueur dudit arbre d'enroulement (1).

11. Arbre d'enroulement selon l'une des revendications 3 à 5, dans lequel le tube d'enroulement comprend des baguettes de rigidification telles que par exemple métalliques, introduites dans des canaux longitudinaux audit tube.

12. Arbre d'enroulement selon l'une des revendications 1 à 11 dans lequel le moteur électrique tubulaire est un moteur à courant alternatif.

13. Agencement de dispositif de fermeture, tel qu'un volet roulant, ou de dispositif d'occultation, tel que store, comprenant un arbre d'enroulement motorisé (1) selon l'une des revendications 1 à 12, dont le moteur tubulaire (3) est alimenté par une source électrique, via un fil de phase et un fil de neutre, ledit moteur tubulaire n'étant pas raccordé à la terre.

## Patentansprüche

1. Motorisierte Wickelwelle (1) vor allem für Rollladen, Markisen oder andere Schließ- oder Verdeckungsvorrichtungen, umfassend ein Wickelrohr (2), einen elektrischen Rohrmotor, der mit einem in erster Linie metallischen Gehäuse (3) versehen ist, wobei der besagte elektrische Rohrmotor (3) in eines (4) der Enden des besagten Wickelrohres (2) eingeführt und dort befestigt wird, für dessen Betätigung zur Rotation in die eine oder andere Richtung über ein Antriebsrad (33) der Welle des besagten Elektromotors, wobei der besagte Rohrmotor eine Drehhalterung für das Wickelrohr an diesem Ende bildet, und der elektrische Rohrmotor (3) einen Lagerring (31) aufweist, der sich im Verhältnis zum zylindrischen Gehäuse dreht und drehfest mit dem Wickelrohr verbunden ist, **dadurch gekennzeichnet, dass**:
- das besagte Wickelrohr (2) aus einem elektrisch isolierenden Material, wie Kunststoff gefertigt ist, und den besagten elektrischen Rohrmotor (3) abdeckt, um eine elektrisch isolierende Hülle für den besagten elektrischen Rohrmotor (3) zu bilden,
- das besagte Wickelrohr (2) und der besagte elektrische Rohrmotor (3) eine untrennbare Einheit bilden, und der Lagerring (31) einen Kragenring (35) aufweist, der in der Lage ist, das Ende des besagten Wickelrohres (2) zu überdecken, und der besagte Motor (3) und das Rohr (2) mit Schrauben (34) oder allen anderen Mitteln zwischen dem besagten Lagerring (31) und dem Wickelrohr (2) fest miteinander verbunden, und in der Lage sind, eine Dichtung (36) zu komprimieren, die zwischen dem besagten Lagerring (31) und dem besagten Wickelrohr (2) vorgesehen ist.

2. Wickelwelle nach Anspruch 1, bei der am dem elektrischen Rohrmotor (3) gegenüber liegenden Ende des Wickelrohres (2) ein Verschluss (37) eingefügt ist, der das besagte Wickelrohr (2) verschließt, und der besagte Verschluss (37) eine Bohrung (38) aufweist, die für die Durchführung einer Verbindungsachse (10) bestimmt ist.

3. Wickelwelle nach einem der Ansprüche 1 oder 2, bei der sich das besagte Wickelrohr (2) in Form eines Rohres aus einem elektrisch isolierenden Material darstellt, das in einem einzigen oder in mehreren Abschnitten extrudiert wird.

4. Wickelwelle nach Anspruch 3, bei der das Wickelrohr (2) zumindest zwei koaxiale Wandungen (5, 6) umfasst, die durch vor allem radiale Versteifungsrippen (7) voneinander getrennt sind, wobei eine der Wandungen des Wickelrohres aus einem inneren Kern (5) mit einem geschlossenen Querschnitt gebildet wird, in dessen Inneres der besagte Rohrmotor (3) eingeführt werden kann, und eine andere der Wandungen durch einen äußeren Kern (6) mit einem geschlossenen Querschnitt gebildet wird, und die Wickelfläche des besagten Wickelrohres (2) darstellt.

5. Wickelwelle nach Anspruch 4, bei der der besagte innere Kern (5) Längsrillen (8) aufweist.

6. Wickelwelle nach einem der Ansprüche 3 bis 5, bei der das Wickelrohr (2) aus zwei Rohrelementen (30, 40) besteht, die extrudiert und ineinander gesteckt werden, wobei eines der Elemente (30) außen die Wickelfläche des Wickelrohres (2) bildet, sowie eine Längsaufnahme für den Rohrmotor (3), und sich das andere Element (40) über quasi den gesamten Raum im äußeren Element (30) erstreckt, der vom besagten Rohrmotor (3) freigelassen wird.

7. Wickelwelle nach einem der Ansprüche 4 oder 5, bei der die Wickelfläche des besagten Wickelrohres (2) Vorrichtungen zur Befestigung einer Rollladenschürze direkt auf der Außenwandung des Rohres (2) oder indirekt über einen Einbruchsicherungsriegel oder flexible Verbindungen aufweist, wobei die besagten Vorrichtungen die Form von Aufnahmezonen, wie Öffnungen auf dem besagten äußeren Kern (6) des Wickelrohres (2) annehmen.

8. Wickelwelle nach einem der Ansprüche 1 bis 7, bei der das Profil des Wickelrohres (2) eine Befestigungszone (50) umfasst, in die die erste Leiste der Rollladenschürze geschoben werden kann.

9. Wickelwelle nach einem der Ansprüche 1 bis 8, für Rollladen, bei der die Wickelfläche des besagten Wickelrohres ein spiralförmiges Profil aufweist.

10. Wickelwelle nach einem der Ansprüche 1 bis 9, bei der am dem elektrischen Rohrmotor (3) gegenüber liegenden Ende des Wickelrohres (2) eine Befestigungsschnittstelle (9) eingebaut ist, wobei in der Bohrung (11) der besagten Befestigungsschnittstelle (9) eine Verbindungsachse (10) mit einer Toleranz vorgesehen ist, die das Gleiten der besagten Verbindungsachse (10) in der besagten Bohrung (11) ermöglicht, und die besagte Verbindungsachse (10) und die Befestigungsschnittstelle (9) eine teleskopische Einheit bilden, mit der die Länge der besagten Wickelwelle (1) angepasst werden kann.

11. Wickelwelle nach einem der Ansprüche 3 bis 5, bei der das Wickelrohr Versteifungsleisten, wie beispielsweise metallische Leisten umfasst, die in Längskanäle des besagten Rohres eingeführt werden.

12. Wickelwelle nach einem der Ansprüche 1 bis 11, bei der der elektrische Rohrmotor ein Wechselstrommotor ist.

13. Anordnung einer Schließvorrichtung, wie ein Rollladen, oder einer Verdeckungsvorrichtung, wie eine Markise, umfassend eine motorisierte Wickelwelle (1) nach einem der Ansprüche 1 bis 12, deren Rohrmotor (3) über eine Phasenader und eine Nullleiterader durch eine Stromquelle versorgt wird, wobei der besagte Rohrmotor nicht geerdet ist.

## Claims

1. Motorised winding shaft (1), in particular for roller shutter, blind or other closing or screening devices, comprising a winding tube (2), a tubular electric motor provided with a casing, in particular metal (3), said tubular electric motor (3) being introduced and secured to one (4) of the ends of said winding tube (2), for its actuating in rotation in one direction or the other by the intermediary of a driving wheel (33) of the shaft of said electric motor, said tubular motor constituting a rotation support for the winding tube at this end, with the tubular electric motor (3) having a bearing ring (31) rotating in relation to the cylindrical casing and secured in rotation to said winding tube, **characterised in that**:
- said winding tube (2) is made from an electrically insulating material, such as plastic, and covers said tubular electric motor (3) in such a way as to constitute an electrically insulating envelope for said tubular electric motor (3),
- said winding tube (2) and said tubular electric motor (3) constitute an inseparable whole, with the bearing ring (31) having a flange (35) able to cover the end of said winding tube (2), said motor (3) and the tube (2) being made joined together by means of screws (34) or any other means between said bearing ring (31) and the winding tube (2), able to compress a seal (36) provided between said bearing ring (31) and said winding tube (2).

2. Winding shaft according to claim 1, wherein a shutter (37) is added to the end of the winding tube (2) opposite the tubular electric motor (3), closing said winding tube (2), said shutter (37) having a bore (38) intended for the passage of a connecting pin (10).

3. Winding shaft according to one of claims 1 or 2, wherein said winding tube (2) has the shape of a tube in an electrically insulating material, extruded in one or several parts.

4. Winding shaft according to claim 3, wherein the winding tube (2) comprises at least two coaxial walls (5, 6), spaced from one another by the intermediary of stiffening ribs (7), in particular radial, with one of the walls of the winding tube being constituted by an inner core (5), with a closed section inside of which can be introduced said tubular motor (3), with another of the walls being constituted by an outer core (6) with a closed section, constituting the winding surface of said winding tube (2).

5. Winding shaft according to claim 4, wherein said inner core (5) has longitudinal grooves (8).

6. Winding shaft according to one of claims 3 to 5, wherein the winding tube (2) is comprised of two tubular extruded elements (30, 40) recessed into one another, with one of the elements (30), outside defining the winding surface of the tube (2), as well as a longitudinal housing for the tubular motor (3), with the other element (40) extending in the outside element (30) over almost all of the free space left by said tubular motor (3).

7. Winding shaft according to claim 4 or 5, wherein the winding surface of said winding tube (2) has means for fastening a roller shutter case, directly on the outer wall of the tube (2), or indirectly by the intermediary of an anti-intrusion lock or flexible connections, said means taking the form of receiving areas such as openings on said outer core (6) of the winding tube (2).

8. Winding shaft according to one of claims 1 to 7 wherein the profile of the winding tube (2) incorporates a fastening area (50) wherein the first blade of the roller shutter case can be slid.

9. Winding shaft according to one of claims 1 to 8, for a roller shutter, wherein the winding surface of said winding tube has a spiral profile.

10. Winding shaft according to one of claims 1 to 9, wherein a fastening interface (9) is recessed at the end of said winding tube (2) opposite said tubular motor (3), with a connecting pin (10) being provided in a bore (11) of said fastening interface (9), according to a tolerance that authorises the sliding of said connecting pin (10) in said bore (11), said connecting pin (10) and the fastening interface (9) constituting a telescopic assembly making it possible to adjust the length of said winding shaft (1).

11. Winding shaft according to one of claims 3 to 5, wherein the winding tube comprises reinforcing strips such as for example metal, introduced into channels longitudinal to said tube.

12. Winding shaft according to one of claims 1 to 11 wherein the tubular electric motor is an AC motor.

13. Arrangement of a closing device, such as a roller shutter, or screening device, such as a blind, comprising a motorised winding shaft (1) according to one of claims 1 to 12, of which the tubular motor (3) is powered by an electric source, via a live wire and a neutral wire, said tubular motor not being connected to the earth.
